# FASCICULE DE BREVET EUROPEEN

(11) **EP 3 129 553 B1**
(45) Date de publication et mention de la délivrance du brevet: **20.03.2019**
(21) Numéro de dépôt: 15719806.0
(22) Date de dépôt: 07.04.2015
(51) Int. Cl.: E01B 7/02, F16C 33/20, F16C 33/10, F16C 33/12, C22C 19/00, C22C 19/03, C22C 37/04

(54) **PIECE POUR DISPOSITIF FERROVIAIRE SANS GRAISSAGE**
SCHMIERMITTELFREIES TEIL FÜR EINE EISENBAHNVORRICHTUNG
LUBRICATION-FREE PIECE FOR A RAILWAY DEVICE

(30) Priorité: 11.04.2014 FR 1453270
(43) Date de publication de la demande: 15.02.2017
(73) Titulaire: Vossloh Cogifer (Société Anonyme), 92500 Rueil Malmaison (FR)
(72) Inventeur: BARRESI, Francesco, 67000 Strasbourg (FR)
(74) Mandataire: Nuss, Laurent
(86) Numéro de dépôt international: PCT/FR2015/050887
(87) Numéro de publication internationale: WO 2015/155454

(56) Documents cités:
- WO-A1-2013/034868
- DE-A1-102008 060 765

## Description

La présente invention se rapporte au domaine ferroviaire des appareils de voie et plus spécifiquement au domaine des surfaces de frottement métal contre métal de ces appareils et notamment au domaine des surfaces de frottement conservant durablement leurs propriétés lubrifiantes.

Actuellement, dans les systèmes ferroviaires tels que les dispositifs de manoeuvre, aiguillages ou coeurs à pointe mobile, les dispositifs comportant un coulissement ou un déplacement entre deux pièces métallique par un frottement de l'une contre l'autre présentent un problème d'usure rapide et de grippage au niveau des surfaces de frottement.

Pour remédier à ces problèmes, il est courant d'opérer un graissage des surfaces destinées à supporter le frottement des différentes pièces métallique entre elles. Toutefois, un tel graissage présente certaines limites dont notamment d'avoir une durabilité restreinte. La graisse déposée sur les surfaces en contact se trouve rapidement éliminée lors de l'utilisation de l'appareil qui porte ces surfaces. Au-delà de sa simple élimination, la graisse présente également l'inconvénient de réagir ou de fixer les poussières et particules de son environnement de fonctionnement. Les propriétés lubrifiantes de la graisse se trouvent alors altérées au détriment de la faible résistance lors du glissement des surfaces l'une contre l'autre.

Une solution, alternative au graissage, consiste à réaliser une surface de frottement à partir d'une couche de polymères thermoplastiques lubrifiants, tel que, par exemple, du polyétheréthercétone. Toutefois, le dépôt d'un tel polymère sur une surface de type acier ou fonte à graphite sphéroïdale présente comme inconvénient d'entraîner rapidement la dégradation des caractéristiques lubrifiantes intrinsèques de la couche de polymères. Face à cette situation, une solution consiste à utiliser une couche intermédiaire d'acier amorphe pour limiter, voire supprimer, cette dégradation. Cependant, si une telle solution présente une efficacité reconnue, l'ajout d'une couche intermédiaire d'acier amorphe est une opération qui présente l'inconvénient d'avoir un coût conséquent pour l'équipement de surfaces de frottement.

Le document WO-A-2013/034868 divulgue une telle couche intermédiaire. Le document DE-A-102008060765 montre une couche à base de nickel-aluminium dans un palier multicouches.

La présente invention a pour but de pallier ces inconvénients en proposant une solution au coût moins important que celles de l'art antérieur qui permette l'obtention d'une surface adaptée pour permettre, de façon durable, un frottement métal contre métal fonctionnant avec des contraintes de résistance aux mouvements qui présentent de faibles valeurs.

A cet effet, l'invention concerne une pièce comprenant une surface de frottement contre une seconde surface, cette pièce comprenant au moins une structure en acier ou fonte à graphite sphéroïdale, la surface externe de la pièce faisant intervenir au moins une couche de polymères thermoplastiques lubrifiants, caractérisée en ce que la pièce comporte une couche intermédiaire à base de nickel-aluminium directement entre la structure en acier ou fonte à graphite sphéroïdale et la couche de polymères thermoplastiques lubrifiants.

L'invention a également pour objet une articulation caractérisée en ce qu'elle comprend au moins une pièce portant une surface de frottement selon l'invention.

L'invention concerne également un procédé de traitement d'une surface d'une structure en acier en vue d'une réduction de la résistance au frottement et de l'obtention d'une pièce selon l'invention, caractérisé en ce que le procédé de traitement comprend au moins :
- une étape de lissage de la surface à traiter,
- une étape de nettoyage de la surface lissée,
- une étape de projection d'une composition à base de nickel-aluminium sur la surface lissée
- une étape d'imprégnation ou de projection thermique d'un polymère thermoplastique liquide ou poudre sur la surface lissée-nettoyée,
- une étape de polymérisation ou de finition par chauffage.

L'invention concerne encore la mise en oeuvre d'au moins une pièce selon l'invention dans un élément du domaine ferroviaire.

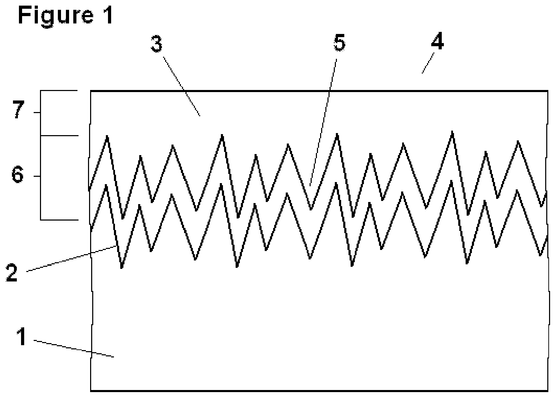

L'invention sera mieux comprise, grâce à la description ci-après, qui se rapporte à au moins un mode de réalisation préféré, donné à titre d'exemple non limitatif, et expliqué avec référence au dessin schématique annexé où la figure 1 est la représentation schématique d'un exemple de réalisation de l'épaisseur d'une pièce portant une surface de frottement selon l'invention.

L'invention concerne un revêtement de surface duplex permettant de faciliter principalement le frottement métal sur métal en cycle de mouvement de translation type séquentiel voire aléatoire entre deux antagonistes l'un fixe et l'autre mobile, sous charge et par tous les temps et dans des conditions atmosphériques sévères. Toutefois, comme expliqué dans le présent document, l'invention est également adaptée pour faciliter le frottement entre des pièces antagonistes arrangées selon d'autres modes de réalisation.

L'invention se rapporte à une pièce comprenant une surface de frottement 4 contre une seconde surface, cette pièce comprenant au moins une structure 1 en acier ou fonte à graphite sphéroïdale, la surface externe 4 de la pièce faisant intervenir au moins une couche 3 de polymères thermoplastiques lubrifiants, caractérisée en ce que la pièce comporte une couche 2 intermédiaire à base de nickel-aluminium directement entre la structure 1 en acier ou fonte à graphite sphéroïdale et la couche 3 de polymères thermoplastiques lubrifiants.

Il convient de noter que la composition de mélange nickel-aluminium présente au moins 60% de Nickel (Ni), le second composant majoritaire étant l'Aluminium (Al).

Cette interaction entre deux surfaces peut être effectuée, par exemple, dans le cadre d'une articulation entre deux éléments au sein d'un dispositif ou entre deux éléments appartenant respectivement à des dispositifs différents. La première pièce comprend alors au moins une structure 1 en acier ou fonte à graphite sphéroïdale et une surface externe 4 faisant intervenir au moins une couche 3 de polymères thermoplastiques lubrifiants. La pièce comprend alors une couche 2 intermédiaire à base de nickel-aluminium directement entre la structure 1 en acier ou fonte à graphite sphéroïdale et la couche 3 de polymères thermoplastiques lubrifiants.

Dans le cadre de l'invention, la couche de polymères peut être portée par la surface externe d'une seule des pièces destinées à former l'articulation ou par chacune des pièces de l'articulation. De plus, l'invention peut être appliquée aussi bien à des surfaces d'articulations planes qu'à des surfaces circulaires ou courbées.

La couche de polymères 3 a pour objet, dans le cadre de l'invention, de jouer un rôle de lubrifiant en permettant de diminuer de façon significative la résistance due au frottement des surfaces 4 de chacune des pièces lors d'un déplacement de l'une sur l'autre. La couche 3 de thermoplastique permet de réduire le coefficient de frottement en obtenant une valeur de l'ordre de 0,2, préférentiellement de l'ordre de 0,15 et idéalement de 0,09.

Selon un mode de réalisation particulier et non limitatif de l'invention, au moins un des polymères thermoplastiques utilisés est un thermoplastique semi-cristallin thermostable. Selon un exemple particulier, le thermoplastique utilisé comprend au moins un polyetherethercétone aussi appelé PEEK (Poly Ether Ether Ketone). La présence d'additifs dans cette composition permet également une optimisation de la résistance à l'abrasion et du coefficient de frottement.

Les propriétés de lubrification de la couche de polymères 3 thermoplastiques peuvent être altérées lorsque l'articulation fonctionne dans des conditions qui présentent des variations de températures, des intempéries diverses et/ou au sein d'un environnement qui facilite les dégradations, tel que, par exemple, du fait de la présence de poussières. La durabilité de la surface 4 de frottement et notamment la résistance de la surface 4 de frottement à la corrosion est améliorée par intégration de la couche 2 intermédiaire à base de nickel-aluminium disposée directement entre, d'une part, la structure 1 en acier ou fonte à graphite sphéroïdale et, d'autre part, la couche de polymères 3 thermoplastiques lubrifiants.

Une particularité de l'invention consiste également à améliorer la durabilité des propriétés lubrifiantes de la couche de polymères 3 en restreignant l'usure de la couche de polymères 3 grâce à une imbrication de la couche de polymères 3 et de la surface de la structure 1 en acier ou fonte à graphite sphéroïdale permettant la combinaison des propriétés de chacune de ces couches.

Cette imbrication est effectuée grâce à la formation d'un relief 5 sur la surface externe de la structure 1 en acier ou fonte à graphite sphéroïdale. Les cavités de ce relief 5 sont alors, au moins en partie, comblées par la couche 2 intermédiaire à base de nickel-aluminium. La couche de polymères 3 qui recouvre la couche 2 intermédiaire, uniformise alors ce relief 5 et la surface 4 de frottement de la pièce.

La couche de polymères 3 réalise ainsi une couche externe formée par une première épaisseur 6, en profondeur, qui remplit au moins partiellement les cavités du relief 5 de la surface de la structure 1 en acier ou fonte à graphite sphéroïdale recouverte par la couche 2 intermédiaire à base de nickel-aluminium, et par une seconde épaisseur 7, en surface, qui forme la surface 4 de contact ou s'opère le frottement de la pièce.

Selon une particularité de réalisation, lorsque la structure 1 de la pièce est réalisée en fonte à graphite sphéroïdale, la couche 2 intermédiaire à base de nickel-aluminium opère un isolement des particules de graphite sphéroïdales. Cet isolement permet une séparation entre le graphite sphéroïdale et la couche de polymères 3 thermoplastiques lubrifiants. Par ailleurs, la couche 2 intermédiaire à base de nickel-aluminium intervient pour pallier au problème de l'hétérogénéité qui existe dans la structure 1 entre les mailles de graphite et la matrice métallique de la fonte.

La réalisation d'une surface de frottement selon l'invention fait ainsi intervenir plusieurs étapes d'un procédé de traitement permettant l'obtention d'une pièce selon l'invention. Ces différentes étapes correspondent au moins à :
- une étape de lissage de la surface à traiter,
- une étape de nettoyage de la surface lissée,
- une étape de projection d'une composition 2 à base de nickel-aluminium sur la surface lissée,
- une étape d'imprégnation ou de projection thermique d'un polymère thermoplastique liquide ou poudre sur la surface 2 à base de nickel-aluminium,
- une étape de polymérisation ou de finition par chauffage du thermoplastique déposé.

Selon un exemple de réalisation non limitatif de l'invention, le polymère thermoplastique est imprégné sur la surface de frottement par une projection mettant en jeu un pistolet à air comprimé.

Selon un exemple de réalisation, après polymérisation, la couche thermoplastique 3 présente une épaisseur supérieure à 10µm, préférentiellement supérieure à 15µm et idéalement supérieure à 20µm. La couche 3 de thermoplastique permet de réduire le coefficient de frottement en obtenant une valeur de l'ordre de 0,2, préférentiellement de l'ordre de 0,15 et idéalement de 0,09.

Selon une particularité de réalisation non limitative de l'invention, préalablement à cette mise en place d'une couche de thermoplastique polymérisé, le procédé comprend différentes étapes permettant une amélioration de la corrodabilité de la surface de frottement avec la formation d'une couche 2 de nickel-aluminium sur laquelle est disposée la couche 3 de thermoplastique polymérisé. Ces différentes étapes correspondent, en outre, à :
- une étape de dégraissage de la surface acier ou fonte à graphite sphéroïdale,
- une étape de lissage de la surface acier ou fonte à graphite sphéroïdale,
- une étape de projection thermique d'au moins un substrat compris dans une liste intégrant notamment du nickel (Ni), et de l'aluminium (Al).

Selon un mode de réalisation préféré mais non limitatif du procédé de réalisation d'une surface de l'invention, le procédé comprend plusieurs étapes permettant d'associer plus intimement la couche 3 de thermoplastique polymérisé et la surface supérieure de la structure 1 qui porte cette couche 3 thermoplastique. La réalisation de cette association intime fait ainsi intervenir :
- une étape d'abrasion de la surface d'acier ou de fonte à graphite sphéroïdale par projection de corindon jusqu'à obtention d'un état de surface au relief déterminé,
- une étape de nettoyage de la surface acier abrasée.

Ces étapes d'abrasion sont opérées préalablement à une étape de dépôt de la couche 3 de thermoplastique polymérisé et à une étape de projection d'une composition 2 à base de nickel-aluminium sur la surface de la structure 1 en acier ou fonte à graphite sphéroïdale.

Selon un exemple de réalisation, l'abrasion de la surface d'acier ou de fonte à graphite sphéroïdale est effectuée par un corindon de type Cristalba F40-F60 ou tout autre type garantissant l'absence d'oxyde de fer. Ce corindon permet d'obtenir une rugosité dont le Ra est inférieur à 20µm, préférentiellement inférieur à 10µm et idéalement compris entre 7µm et 9µm.

La réalisation d'un relief sur la surface externe de la structure 1 en acier ou en fonte forme un ensemble de plusieurs cavités 5 réparties au niveau cette surface. Lors du dépôt de la couche de polymères thermoplastiques et notamment lors de l'étape d'imprégnation du polymère liquide, ce polymère remplit et comble notamment les différentes cavités du relief de la surface de la structure 1 en acier ou en fonte.

La surface de frottement présente ainsi, dans son épaisseur, sous la couche de polymères thermoplastiques 3 proprement dite, une portion d'épaisseur 6 au niveau de laquelle la surface de la structure 1 en acier ou en fonte recouverte par la couche 2 intermédiaire à base de nickel-aluminium et le polymère thermoplastique sont imbriqués. Cette portion d'épaisseur 6 particulière de la surface de frottement participe notamment à l'amélioration de la durabilité de la surface de frottement. En effet, lors de la mise en oeuvre de la surface de frottement, la couche formée par l'épaisseur 7 seule du thermoplastique 3 polymérisé présente une dureté et une résistance à l'usure insuffisante pour garantir une durabilité suffisamment importante. Toutefois, après une durée t1 au cours de laquelle la surface de frottement supporte une usure progressive, cette couche externe de polymère thermoplastique seul 7 disparaît. La surface qui supporte le frottement est alors réalisée par la surface externe de l'épaisseur 6 de la structure 1 en acier ou en fonte recouverte par la couche 2 intermédiaire à base de nickel-aluminium et le polymère thermoplastique 3 sont imbriqués. La surface externe sur laquelle est opéré le frottement, est alors formée par une alternance de surface de la structure 1 d'acier et de fonte et de surface de polymère thermoplastique 3. Cette alternance permet ainsi une combinaison de la dureté de l'acier ou de la fonte, aux propriétés lubrifiantes du polymère thermoplastique 3. La surface de frottement permet ainsi une association combinée entre la dureté et la lubrification permettant de maintenir durablement dans le temps t2 les propriétés lubrifiantes du polymère thermoplastique 3. L'association de la couche 3 de polymère thermoplastique avec la couche 2 intermédiaire à base de nickel-aluminium permet ainsi de réduire le coefficient de frottement en obtenant une valeur de l'ordre de 0,2, préférentiellement de l'ordre de 0,15 et idéalement de 0,09. La surface de frottement de l'invention permet ainsi d'assurer une durabilité de la faible résistance supportée par la surface de frottement.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Pièce comprenant une surface de frottement (4) contre une seconde surface, cette pièce comprenant au moins une structure (1) en acier ou fonte à graphite sphéroïdale, la surface externe (4) de la pièce faisant intervenir au moins une couche (3) de polymères thermoplastiques lubrifiants, **caractérisée en ce que** la pièce comporte une couche (2) intermédiaire à base de nickel-aluminium directement entre la structure (1) en acier ou fonte à graphite sphéroïdale et la couche (3) de polymères thermoplastiques lubrifiants.

2. Pièce selon la revendication 1, **caractérisée en ce que** la surface de la structure (1) en acier ou en fonte à graphite sphéroïdale sur laquelle est disposée la couche (2) intermédiaire à base de nickel-aluminium, réalise un relief (5) au moins comblé en partie par la couche (2) intermédiaire à base de nickel-aluminium.

3. Pièce selon une des revendications 1 ou 2, **caractérisée en ce que** sa structure (1) étant réalisée en fonte à graphite sphéroïdale, la couche (2) intermédiaire à base de nickel-aluminium opère un isolement des particules de graphite sphéroïdale.

4. Pièce selon une des revendications 1 à 3, **caractérisée en ce qu'**au moins un polymère thermoplastique comprend au moins un thermoplastique semi-cristallin thermostable.

5. Pièce selon une des revendications 1 à 4, **caractérisée en ce qu'**au moins un polymère thermoplastique comprend au moins une polyétheréthercétone.

6. Articulation formant un assemblage glissant **caractérisé en ce qu'**il comprend au moins une pièce selon une des revendications 1 à 5.

7. Procédé de traitement d'une surface d'une structure (1) en acier ou fonte à graphite sphéroïdale en vue d'une réduction de la résistance au frottement et de l'obtention d'une pièce selon une des revendications 1 à 5, **caractérisé en ce que** le procédé de traitement comprend au moins :
- une étape de lissage de la surface à traiter,
- une étape de nettoyage de la surface lissée,
- une étape de projection d'une composition (2) à base de nickel-aluminium sur la surface lissée,
- une étape d'imprégnation ou de projection thermique d'un polymère (3) thermoplastique liquide ou poudre sur la surface (2) à base de nickel-aluminium,
- une étape de polymérisation ou de finition par chauffage.

8. Procédé de traitement d'une surface d'une structure (1) selon la revendication 7, **caractérisé en ce que** le procédé comprend, en outre, préalablement aux étapes précédentes :
- une étape de dégraissage de la surface acier ou fonte à graphite sphéroïdale,
- une étape de lissage de la surface acier ou fonte à graphite sphéroïdale,
- une étape de projection thermique d'au moins un substrat compris dans une liste intégrant notamment du nickel et de l'aluminium.

9. Procédé de traitement d'une surface d'une structure (1) selon une des revendications 7 ou 8, **caractérisé en ce que** le procédé comprend au moins :
- une étape d'abrasion de la surface par projection de corindon jusqu'à obtention d'un état de surface au relief déterminé,
- une étape de nettoyage de la surface acier abrasée.

10. Mise en oeuvre d'au moins une pièce selon une des revendications 1 à 5 dans un élément du domaine ferroviaire.

## Patentansprüche

1. Teil, das eine Reibungsfläche (4) gegenüber einer zweiten Fläche umfasst, wobei dieses Teil zumindest eine Struktur (1) aus Stahl oder Sphäroguss umfasst, wobei die Außenfläche (4) des Teils mindestens in eine Schicht (3) aus schmierfähigen thermoplastischen Polymeren umfasst, **dadurch gekennzeichnet, dass** das Teil direkt zwischen der Struktur (1) aus Stahl oder Sphäroguss und der Schicht (3) aus schmierfähigen thermoplastischen Polymeren eine Zwischenschicht (2) auf Nickel-Aluminium-Basis umfasst.

2. Teil nach Anspruch 1, **dadurch gekennzeichnet, dass** die Fläche der Struktur (1) aus Stahl oder Sphäroguss, auf welcher die Zwischenschicht (2) auf Nickel-Aluminium-Basis angeordnet ist, ein Relief (5) ausbildet, welches zumindest teilweise durch die Zwischenschicht (2) auf Nickel-Aluminium-Basis gefüllt ist.

3. Teil nach einem der Ansprüche 1 oder 2, **dadurch gekennzeichnet, dass** seine Struktur (1) aus Sphäroguss ausgebildet ist, und dass die Zwischenschicht (2) auf Nickel-Aluminium-Basis eine Isolierung der Kugelgraphitteilchen bewirkt.

4. Teil nach einem der Ansprüche 1 bis 3, **dadurch gekennzeichnet, dass** mindestens ein thermoplastisches Polymer mindestens einen thermostabilen, teilkristallinen Thermoplast umfasst.

5. Teil nach einem der Ansprüche 1 bis 4, **dadurch gekennzeichnet, dass** mindestens ein thermoplastisches Polymer mindestens ein Polyetheretherketon umfasst.

6. Gelenk, das eine Gleitanordnung ausbildet, **dadurch gekennzeichnet, dass** sie mindestens ein Teil nach einem der Ansprüche 1 bis 5 umfasst.

7. Verfahren zur Behandlung einer Fläche einer Struktur (1) aus Stahl oder Sphäroguss zum Reduzieren des Reibungswiderstandes und zur Herstellung eines Teils nach einem der Ansprüche 1 bis 5, **dadurch gekennzeichnet, dass** das Behandlungsverfahren mindestens umfasst:
- einen Glättungsschritt der zu behandelnden Fläche,
- einen Reinigungsschritt der geglätteten Fläche,
- einen Schritt des Aufspritzens einer Zusammensetzung (2) auf Nickel-Aluminium-Basis auf die geglättete Fläche,
- einen Schritt des Imprägnierens oder des thermischen Aufspritzens eines flüssigen oder pulverförmigen thermoplastischen Polymers (3) auf die Fläche (2) auf Nickel-Aluminium-Basis,
- einen Polymerisations- oder Endbearbeitungsschritt durch Erhitzen.

8. Verfahren zur Behandlung einer Fläche einer Struktur (1) nach Anspruch 7, **dadurch gekennzeichnet, dass** das Verfahren vor den vorangehenden Schritten ferner umfasst:
- einen Entfettungsschritt der Fläche aus Stahl oder Sphäroguss,
- einen Glättungsschritt der Fläche aus Stahl oder Sphäroguss,
- einen Schritt des thermischen Aufspritzens mindestens eines Substrats, das von einer Liste umfasst ist, die insbesondere Nickel und Aluminium aufweist.

9. Verfahren zur Behandlung einer Fläche einer Struktur (1) nach einem der Ansprüche 7 oder 8, **dadurch gekennzeichnet, dass** das Verfahren mindestens umfasst:
- einen Abschleifschritt der Fläche durch Aufspritzen von Korund, bis eine Oberflächenbeschaffenheit mit einem bestimmten Relief erreicht ist,
- einen Reinigungsschritt der geschliffenen Stahlfläche.

10. Implementierung mindestens eines Teils nach einem der Ansprüche 1 bis 5 in einem Element der Eisenbahndomäne.

## Claims

1. Component comprising a frictional surface (4) against a second surface, said component comprising at least one structure (1) made of steel or spheroidal graphite cast iron, the external surface (4) of the component including at least one layer (3) of lubricating thermoplastic polymers, **characterised in that** the component comprises a nickel-aluminium based intermediate layer (2) directly between the steel or spheroidal graphite cast iron structure (1) and the layer (3) of lubricating thermoplastic polymers.

2. Component according to claim 1, **characterised in that** the surface of the structure (1) made of steel or spheroidal graphite cast iron, onto which the nickel-aluminium based intermediate layer (2) is arranged, forms a relief (5) that is at least partially filled by the nickel-aluminium based intermediate layer (2).

3. Component according to any of claims 1 or 2, **characterised in that** its structure (1) is made from a spheroidal graphite cast iron, the nickel-aluminium based intermediate layer (2) provides insulation of the spheroidal graphite particles.

4. Component according to any of claims 1 to 3, **characterised in that** at least one thermoplastic polymer includes at least one thermostable semi-crystalline thermoplastic.

5. Component according to any of claims 1 to 4, **characterised in that** at least one thermoplastic polymer includes at least one polyether ether ketone.

6. Joint forming a sliding assembly, **characterised in that** it comprises at least one component according to any of claims 1 to 5.

7. Method for processing a surface of a structure (1) made of steel or spheroidal graphite cast iron to achieve a reduction of the frictional resistance and obtain a component according to any of claims 1 to 5, **characterised in that** the method for processing comprises at least:
- a step of smoothing the surface to be processed,
- a step of cleaning the smoothed surface,
- a step of projecting a nickel-aluminium based composition (2) onto the smoothed surface,
- a step of impregnating or thermally projecting a liquid or powder thermoplastic polymer (3) onto the nickel-aluminium based surface (2),
- a step of polymerisation or finishing by heating.

8. Method for processing a surface of a structure (1) according to claim 7, **characterised in that** the method also comprises prior to the preceding steps:
- a step of degreasing the steel or spheroidal graphite cast iron surface,
- a step of smoothing the steel or spheroidal graphite cast iron surface,
- a step of thermal projection of at least one substrate included in a list comprising in particular nickel and aluminium.

9. Method for processing a surface of a structure (1) according to any of claims 7 or 8, **characterised in that** the method comprises at least:
- a step of abrading the surface by the projection of corundum until a surface is obtained with a specific relief,
- a step of cleaning the abraded steel surface.

10. Implementation of at least one component according to any of claims 1 to 5 in an element of the railway sector.
